# EUROPEAN PATENT SPECIFICATION

(11) **EP 3 958 584 B1**
(45) Date of publication and mention of the grant of the patent: **21.08.2024**
(21) Application number: 20818142.0
(22) Date of filing: 05.06.2020
(51) Int. Cl.: H04Q 11/00, H04J 14/02

(54) **CONTROL METHOD FOR RADIO ACCESS NETWORK, NETWORK DEVICE, AND SYSTEM**
VERFAHREN ZUR STEUERUNG EINES FUNKZUGANGSNETZES; NETZWERKVORRICHTUNG UND SYSTEM
PROCÉDÉ DE COMMANDE POUR RÉSEAU D'ACCÈS RADIO, DISPOSITIF RÉSEAU, ET SYSTÈME

(30) Priority: 06.06.2019 CN 201910491675
(43) Date of publication of application: 23.02.2022
(73) Proprietor: China Mobile Communication Co., Ltd Research Institute, Beijing 100053 (CN); CHINA MOBILE COMMUNICATIONS GROUP CO., LTD., Beijing 100032 (CN)
(72) Inventor: LI, Han, Beijing 100032 (CN); ZHANG, Dechao, Beijing 100032 (CN); HAN, Liuyan, Beijing 100032 (CN); BAI, Lirong, Beijing 100032 (CN); WANG, Chen, Beijing 100032 (CN); WANG, Dong, Beijing 100032 (CN); CAI, Qian, Beijing 100032 (CN); LI, Yunbo, Beijing 100032 (CN)
(74) Representative: J A Kemp LLP
(86) International application number: PCT/CN2020/094679
(87) International publication number: WO 2020/244633

(56) References cited:
- WO-A1-2019/051868
- CN-A- 106 059 660
- TW-B- I 609 575
- US-A1- 2016 315 695
- XU RONG; DENG CHUNSHENG: "5G fronthaul network can protect and manage a semi-active WDM innovative solution", PROCEEDINGS OF 5G NETWORK INNOVATION SEMINAR (2019), 15 August 2019 (2019-08-15) - 15 August 2019 (2019-08-15), CN, pages 257 - 259, XP009531728
- HUANG LE-TIAN;DENG CHUN-SHENG: "A semi-active wavelength division multiplexing scheme for 5G front-haul", TELECOM ENGINEERING TECHNICS AND STANDARDIZATION, vol. 33, no. 269, 15 January 2020 (2020-01-15), pages 31 - 37, XP055864395, ISSN: 1008-5599, DOI: 10.13992/j.cnki.tetas.2020.01.007
- CHEN AIMIN: "The Technical Background, Application and Prospect of NG-PON", ZTE TECHNOLOGY JOURNAL, vol. 24, no. 6, 6 December 2018 (2018-12-06), pages 56 - 59, XP055772369, ISSN: 1009-6868, DOI: 10.19729/j.cnki.1009-6868.2018.06.011

## Description

### CROSS-REFERENCE TO RELATED APPLICATION

This application claims priority to Chinese patent application No. 201910491675.3, filed on June 6, 2019.

### TECHNICAL FIELD

The disclosure relates to the technical field of communications, and particularly to a method for controlling a radio access network, network equipments and a system.

### BACKGROUND

With the development of mobile communication technology, the functions of a Radio Access Network (RAN) are segmented. In a 5th Generation (5G) mobile communication system, the RAN is reconstructed into a multi-level architecture, including a Remote Radio Unit (RRU) (or called an Active Antenna Unit (AAU)), a Distributed Unit (DU) and a Centralized Unit (CU), and the network deployment of a transport network may be divided into fronthaul, middlehaul and backhaul. The proportion of centralized base stations in a Centralized-Radio Access Network (C-RAN) is increasing day by day, and a single DU room may cover 6-10 local and remote RRUs/AAUs, and even 11-30 RRUs/AAUs in some scenarios. A fronthaul network has become an important component of a mobile communication transport network. The fronthaul technology mainly includes several modes such as optical fiber direct access, passive Wavelength Division Multiplexing (WDM), and active equipment networking.

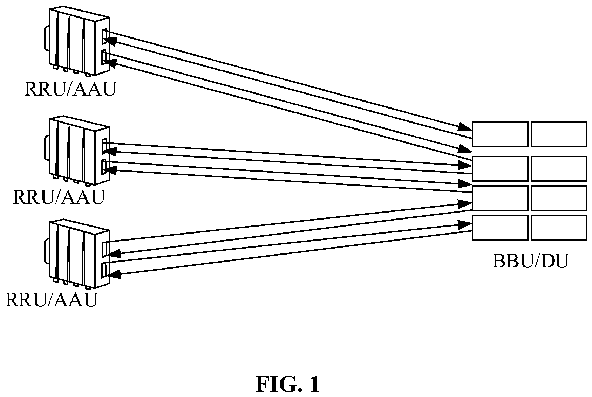

As shown in FIG. 1, in an optical fiber direct access solution, the RRU/AAU and the DU are directly connected point-to-point through a fronthaul optical module, which consumes a large number of optical fibers. Taking each RRU/AAU being deployed with three RRUs/AAUs as an example, if each RRU/AAU needs two 25G interfaces, one RRU/AAU will consume 12 optical fibers (including optical fibers for uplink and downlink transmission), and the transport management system in the optical fiber direct access solution cannot obtain information such as the connection status of optical fibers between RRU/AAU and DU.

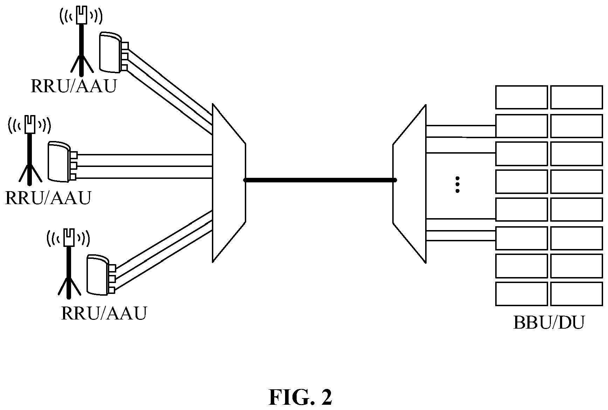

As shown in FIG. 2, in a passive WDM solution, the RRU/AAU and BBU/DU equipments are equipped with color optical modules, and multiple wavelengths are multiplexed for transmission through a passive wavelength division multiplexing/demultiplexing equipment. Compared with the optical fiber direct access solution, in the segment of the Optical Distribution Network (ODN), trunk fiber may be saved by WDM, but the DU/AAU is equipped with the color optical modules, for which management measurement is weak, it is insensitive to ODN faults, and it is difficult to operate and maintain optical modules, and difficult to check since check can only be manually performed.

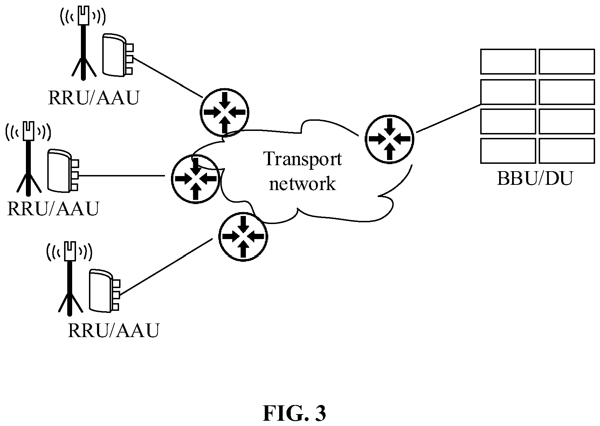

As shown in FIG. 3, in an active equipment networking solution, a client side of an active transmission equipment is connected with a wireless equipment by a common gray-optical interface, and the transmission equipment performs connecting networking, so as to complete functions such as traffic convergence and remote extension of services. In terms of technological choice, WDM, Slicing Packet Network (SPN), and Wavelength Division Multiplexing-Passive Optical Network (WDM-PON) may be adopted. The solution may effectively control the network, but the wireless and transmission systems have clear boundaries at the network element level, and have no intersection at the network element management and control level. Further, a remote transmission equipment needs power. Therefore, the remote transmission equipment can only be installed at the RRU/AAU to handle single station services, which requires more transmission equipments and need large costs for deployment, operation and maintenance.

Since a single computer room on the C-RAN side of 5G may cover 6-10 RRUs/AAUs, and even cover 11-30 RRUs/AAUs in some scenarios, the fronthaul technology cannot adapt to 5G scenarios.

Related arts can be found in US 2016/315695 A1.

### SUMMARY

The present invention is defined in the claims.

The disclosure provides a method for controlling a radio access network, network equipments and a system, which solves the problem that the fronthaul technology in the related art is not suitable for a 5G mobile communication system.

Some embodiments of the disclosure provide a method for controlling a radio access network, which is applied to an active Wavelength Division Multiplexing (WDM) equipment, including the following operations.

A management request is transmitted to a Radio Remote Unit (RRU)/Active Antenna Unit (AAU).

A management request response corresponding to the management request is received from the RRU/AAU side. The management request response carries first status information and/or second status information. The first status information is used to indicate the status of the RRU/AAU, and the second status information is used to indicate the status of a color optical module in the RRU/AAU.

Some embodiments of the disclosure further provide a network equipment. The network equipment is an active WDM equipment, which may include a first transmitting module and a first receiving module.

The first transmitting module is configured to transmit a management request to an RRU/AAU.

The first receiving module is configured to receive a management request response corresponding to the management request from the RRU/AAU side. The management request response carries first status information and/or second status information. The first status information is used to indicate the status of the RRU/AAU, and the second status information is used to indicate the status of a color optical module on the RRU/AAU.

Some embodiments of the disclosure also provide a network equipment, which may include a processor, a memory connected with the processor, and a transceiver connected with the processor. The processor is configured to call and execute a program and data stored in the memory to implement the steps of the method for controlling a radio access network.

Some embodiments of the disclosure also provide a radio access network system, which may include an active WDM equipment, a passive wavelength division multiplexing/demultiplexing equipment, and at least two RRUs/AAUs.

The passive wavelength division multiplexing/demultiplexing equipment is connected with the active WDM equipment through an optical fiber.

Each RRU/AAU is provided with a color optical module, and each color optical module is connected with one port of the passive wavelength division multiplexing/demultiplexing equipment.

The active WDM equipment transmits a management request to the RRU/AAU. The RRU/AAU feeds back a management request response to the active WDM equipment according to the management request. The management request response carries first status information and/or second status information. The first status information is used to indicate the status of the RRU/AAU, and the second status information is used to indicate the status of the color optical module in the RRU/AAU.

The above technical solutions of the disclosure have the beneficial effects that the active WDM equipment is added, so that the active WDM equipment transmits the management request to the RRU/AAU so as to obtain the status of the RRU/AAU and/or the status of the color optical module in the RRU/AAU, thereby implementing the management of the color optical module in the RRU/AAU and links. Through the joint management of the RRU/AAU by wireless and transport systems, the management problems of the color optical modules in an optical fiber network and the RRU/AAU in a fronthaul network in the mobile communication system are solved at a low cost, and the operation and maintenance capability of the network is improved.

### BRIEF DESCRIPTION OF THE DRAWINGS

FIG. 1 illustrates a schematic diagram of a transmission architecture of a radio access network system in an optical fiber direct access mode in the related art.
FIG. 2 illustrates a schematic diagram of a transmission architecture of a radio access network system in a passive WDM mode in the related art.
FIG. 3 illustrates a schematic diagram of a transmission architecture of a radio access network system in an active equipment networking mode in the related art.
FIG. 4 illustrates a flowchart of a method for controlling a radio access network according to some embodiments of the disclosure.
FIG. 5 illustrates a schematic diagram of a module structure of a network equipment according to some embodiments of the disclosure.
FIG. 6 illustrates a block diagram of a network equipment according to some embodiments of the disclosure.
FIG. 7 illustrates a schematic diagram of a transmission architecture of a radio access network system according to some embodiments of the disclosure.

### DETAILED DESCRIPTION

In order to make the to-be-solved technical problems, technical solutions, and advantages of the disclosure clearer, detailed descriptions are made below with reference to the accompanying drawings and specific embodiments. In the following descriptions, specific details, such as specific configurations and components, are provided only to help comprehensively understand the embodiments of the disclosure.

It is to be understood that "one embodiment" and "an embodiment" mentioned in the whole specification mean that specific features, structures or characteristics related to the embodiments are included in at least one embodiment of the disclosure. Therefore, "in one embodiment" or "in an embodiment" mentioned throughout the specification does not always refer to the same embodiment. Furthermore, these particular features, structures, or characteristics may be combined in any suitable manner in one or more embodiments.

It is to be understood that, in each embodiment of the disclosure, a magnitude of a sequence number of each process does not mean an execution sequence and the execution sequence of each process should be determined by its function and an internal logic and should not form any limit to an implementation process of the embodiments of the disclosure.

Besides, terms "system" and "network" in the disclosure may usually be exchanged in the disclosure.

In the embodiments provided in the application, it is to be understood that "B corresponding to A" means that B is associated with A, and B may be determined according to A. However, it is also to be understood that determining B according to A does not mean determining B only according to A, but B may also be determined according to A and/or other information.

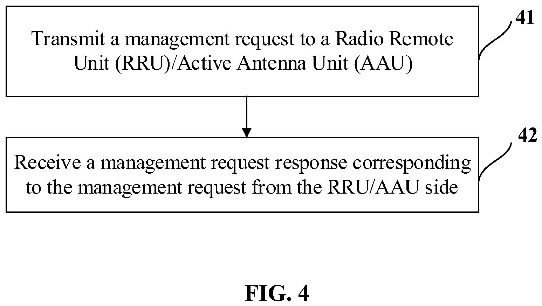

As shown in FIG. 4, some embodiments of the disclosure provide a method for controlling a radio access network, which is applied to an active WDM equipment (or called a WDM active equipment) and specifically include the following steps.

At S41, a management request is transmitted to an RRU/AAU.

In a radio access network system, a fronthaul network side includes a plurality of RRUs/AAUs, such as the RRUs and/or the AAUs. In the embodiment, the RRUs are exemplified, and each RRU is configured with a color optical module. The color optical module may be a color optical module with a fixed wavelength or a color optical module with a tunable wavelength (i.e., the wavelength of the optical signal emitted by the color optical module is variable). Different RRUs use different optical wavelengths, and an RRU side may adopt a passive optical multiplexing/demultiplexing equipment to multiplex and transmit multiple wavelengths from the different RRUs so as to save fiber resources. The active WDM is connected to the RRU side using an optical multiplexer/demultiplexer to demultiplex the wavelengths for processing. Similarly, the embodiment applicable to the RRU is also applicable to the AAU.

The management request includes a management request for the RRU/AAU status, a management request for the color optical module in the RRU/AAU, a management request for link status between the RRU/AAU and the active WDM equipment, and the like.

At S42, a management request response corresponding to the management request is received from the RRU/AAU side.

The management request response carries first status information and/or second status information. The first status information is used to indicate the status of the RRU/AAU, and the second status information is used to indicate the status of the color optical module in the RRU/AAU. Accordingly, when the management request transmitted by the active WDM is the management request for the status of the RRU/AAU, the RRU/AAU queries the status of the RRU/AAU in response to the request and feeds back a query result to the active WDM equipment. When the management request transmitted by the active WDM equipment is the management request for the status of the color optical module, the RRU/AAU queries the status of the color optical module in response to the request and feeds back a query result to the active WDM equipment. It is worth pointing out that the active WDM equipment may transmit the management request to all the RRUs/AAUs or may transmit the management request to a specific RRU/AAU, and the RRU/AAU side responds according to the specific management request and feeds back the management request response.

The active WDM equipment may have the functions of querying and monitoring the status of the RRU/AAU, and may also have various functions such as querying, monitoring and configuring the status of the color optical module in the RRU/AAU. The status of the color optical module includes, but is not limited to, at least one of driving voltage, driving current, transmitting optical power, or receiving optical power. That is, the management of the color optical module in the RRU/AAU equipment by the active WDM equipment includes, but is not limited to, the functions of optical module driving voltage, driving current, transmitting optical power, receiving optical power, etc. Accordingly, the management request may include at least one of the following:
a first request for querying the status of the RRU/AAU;
a second request for monitoring the status of the RRU/AAU;
a third request for querying the status of the color optical module;
a fourth request for monitoring the status of the color optical module; or
a fifth request for configuring the status of the color optical module.

When the active WDM equipment transmits the fifth request to the RRU/AAU, the method includes that: the fifth request is transmitted to the RRU/AAU according to a preset parameter. The preset parameter includes at least one of transmission distance between the active WDM equipment and the RRU/AAU, link loss, transmitting and receiving optical power of the color optical module, or transmitting and receiving optical power of the active WDM equipment. That is, when the active WDM equipment configures the status of the color optical module of the RRU, according to factors such as the transmission distance between the active WDM equipment and the RRU/AAU equipment, the link loss, the transmitting and receiving optical power of the color optical module in the RRU, etc., the requirements of an Open-WDM system and a wireless system are comprehensively considered, and the active WDM equipment may issue an instruction to change the transmitting optical power of the color optical module in the RRU/AAU, so as to adapt to the power budget requirements of a transmission link.

Before S41, the method further includes that: the management request for the RRU/AAU is received from a Building Base band unit (BBU) and/or a Distribution Unit (DU). S41 includes that: the received management request is forwarded to the RRU/AAU. After S42, the method further includes that: the management request response is transmitted to the BBU and/or the DU.

That is, the BBU/DU and other wireless baseband processing units may manage the RRU/AAU, including management of some parameters of the color optical module in the RRU/AAU. The parameters may be signaled to the active WDM equipment.

In the method for controlling a radio access network of some embodiments of the disclosure, the active WDM equipment is added, so that the active WDM equipment transmits the management request to the RRU/AAU so as to obtain the status of the RRU/AAU and/or the status of the color optical module in the RRU/AAU, thereby implementing the management of the color optical module and links in the RRU/AAU. Through the joint management of the RRU/AAU by wireless and transport systems, the management problems of an optical fiber network in the fronthaul network and the color optical module in the RRU/AAU of the mobile communication system are solved at a low cost, and the operation and maintenance capability of the network is improved.

The above embodiments respectively introduce the method for controlling a radio access network in the disclosure, and the following embodiments will further explain the corresponding network equipment with reference to the accompanying drawings.

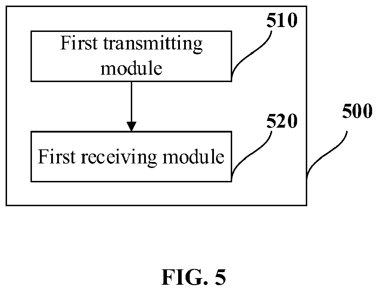

Specifically, as shown in FIG. 5, some embodiments of the disclosure provide a network equipment. The network equipment is an active WDM equipment, which may include the following functional modules.

A first transmitting module 510 is configured to transmit a management request to an RRU/AAU.

A first receiving module 520 is configured to receive a management request response corresponding to the management request from the RRU/AAU side. The management request response carries first status information and/or second status information. The first status information is used to indicate the status of the RRU/AAU, and the second status information is used to indicate the status of a color optical module in the RRU/AAU.

Optionally, the management request includes at least one of the following:
a first request for querying the status of the RRU/AAU;
a second request for monitoring the status of the RRU/AAU;
a third request for querying the status of the color optical module;
a fourth request for monitoring the status of the color optical module; and
a fifth request for configuring the status of the color optical module.

Optionally, the first transmitting module 510 includes a first transmitting submodule.

The first transmitting submodule is configured to transmit the fifth request to the RRU/AAU according to a preset parameter. The preset parameter includes at least one of transmission distance between the active WDM equipment and the RRU/AAU, link loss, transmitting and receiving optical power of the color optical module, or transmitting and receiving optical power of the active WDM equipment.

Optionally, the status of the color optical module includes, but is not limited to, at least one of driving voltage, driving current, transmitting optical power, or receiving optical power.

Optionally, the network equipment 500 further includes a second receiving module.

The second receiving module is configured to receive the management request for the RRU/AAU from a BBU and/or a DU.

The first transmitting module 510 further includes a second transmitting submodule.

The second transmitting submodule is configured to forward the received management request to the RRU/AAU.

Optionally, the network equipment 500 further includes a second transmitting module.

The second transmitting module is configured to transmit the management request response to the BBU and/or the DU.

The embodiment of the network equipment in the disclosure corresponds to the embodiment of the above method, and all the implementation means in the above method embodiment are applicable to the embodiment of the network equipment, and the same technical effect may be achieved. The active WDM equipment transmits the management request to the RRU/AAU so as to obtain the status of the RRU/AAU and/or the status of the color optical module in the RRU/AAU, thereby implementing the management of the color optical module in the RRU/AAU and links. Through the joint management of the RRU/AAU by wireless and transport systems, the management problems of the optical fiber network in the fronthaul network and the color optical module in the RRU/AAU in the mobile communication system are solved at a low cost, and the operation and maintenance capability of the network is improved.

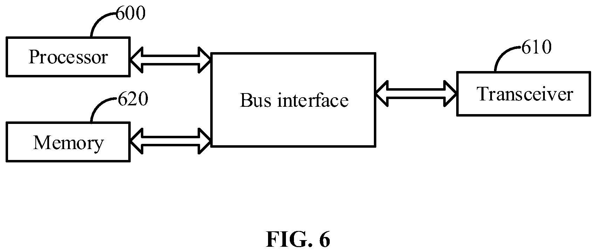

In order to better achieve the above purpose, as shown in FIG. 6, some embodiments of the disclosure also provide a network equipment. The network equipment includes a processor 600, a memory 620 connected with the processor 600 through a bus interface, and a transceiver 610 connected with the processor 600 through a bus interface. The memory 620 is configured to store programs and data used by the processor when executing operations. Data information or pilot is transmitted through the transceiver 610, and an uplink control channel is received through the transceiver 610. When the processor 600 calls and executes the programs and data stored in the memory 620, the following functions are implemented.

The processor 600 is configured to read the program in the memory 620.

The transceiver 610 is configured to receive and transmit data under the control of the processor 600, and specifically configured to transmit the management request to the RRU/AAU, and receive the management request response corresponding to the management request from the RRU/AAU side. The management request response carries first status information and/or second status information. The first status information is used to indicate the status of the RRU/AAU, and the second status information is used to indicate the status of the color optical module in the RRU/AAU.

In FIG. 6, the bus architecture may include any number of interconnected buses and bridges. Specifically, one or more processors represented by the processor 600 are linked with various circuits of the memory represented by the memory 620. The bus architecture may also link various other circuits, such as a peripheral equipment, a voltage regulator and a power management circuit, which are well known in the art, so they will not be further described in the disclosure. The bus interface provides an interface. The transceiver 610 may be a plurality of elements, i.e., including a transmitter and a receiver, providing a unit for communicating with various other equipments over a transmission medium. The processor 600 is responsible for managing the bus architecture and general processing, and the memory 620 may store data used by the processor 600 when performing operations.

Those skilled in the art may understand that all or part of the steps to implement the above embodiments may be completed by hardware, and may also be completed by a computer program indicating related hardware. The computer program includes an instruction to execute part or all of the steps of the above methods. The computer program may be stored in a readable storage medium, and the storage medium may be any form of storage medium.

Some embodiments of the disclosure also provide a computer readable storage medium, and a computer program is stored on the computer readable storage medium. When executed by a processor, the computer program implements each process of the above-mentioned method for controlling a radio access network and can reach the same technical effect, which is not described here to avoid repetition. The computer readable storage medium, such as a Read-Only Memory (ROM), a Random Access Memory (RAM), a magnetic disk or an optical disk.

In addition, it is to be pointed out that each component or each step in the apparatus and method of the disclosure may clearly be split and/or recombined. Such splitting and/or recombination should be considered as equivalent solutions of the disclosure. Moreover, the series of processed steps may be naturally executed according to a time sequence of description, but are not always required to be executed according to the time sequence, and some steps may be executed concurrently or independently. It can be understood by those of ordinary skill in the art that all or any steps or components of the method and apparatus of the disclosure may be implemented by hardware, firmware, software, or a combination thereof in any computing apparatus (including a processor, a storage medium, etc.) or a network of the computing apparatus. This may be implemented by those of ordinary skill in the art using their basic programming skills after reading the description of the disclosure.

Therefore, the objective of the disclosure may also be achieved by running a program or a group of programs in any computing apparatus. The computing apparatus may be a well-known universal apparatus. Therefore, the objective of the disclosure may also be achieved only by providing a program product including a program code that implements the method or the apparatus. That is, such a program product also forms the disclosure, and a storage medium storing the program product also forms the disclosure. Clearly, the storage medium may be any well-known storage medium or any storage medium to be developed in the future. It is also to be pointed out that each component or each step in the apparatus and method of the disclosure may clearly be split and/or recombined. Such splitting and/or recombination should be considered as equivalent solutions of the disclosure. Moreover, the series of processed steps may be naturally executed according to a time sequence of description, but are not always required to be executed according to the time sequence. Some steps may be executed concurrently or independently.

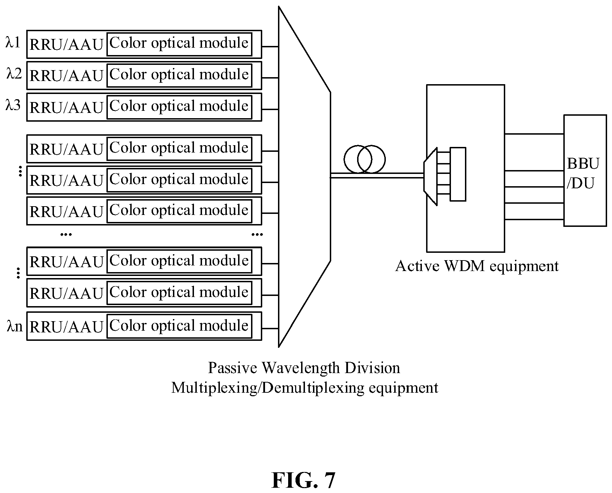

Furthermore, some embodiments of the disclosure also provide a radio access network system, or called an open-WDM system. As shown in FIG. 7, the system includes an active WDM equipment, a passive wavelength division multiplexing/demultiplexing equipment, and at least two RRUs/AAUs.

The active WDM equipment is alternatively called a WDM active equipment.

The passive wavelength division multiplexing/demultiplexing equipment is connected with the active WDM equipment through an optical fiber. The passive multiplexing/demultiplexing equipment is replaceable by a passive optical splitter.

Each RRU/AAU is provided with a color optical module, and each color optical module is connected with one port of the passive wavelength division multiplexing/demultiplexing equipment. The color optical module is a color optical module with a fixed wavelength, or the color optical module is a color optical module with a tunable wavelength. Different RRUs use different optical wavelengths, and the RRU/AAU side may adopt the passive wavelength division multiplexing/demultiplexing equipment to multiplex and transmit multiple wavelengths from the different RRUs/AAUs so as to save fiber resources. Correspondingly, the active WDM is connected to the RRU/AAU side using an optical multiplexer/demultiplexer to demultiplex the wavelengths for processing.

The active WDM equipment transmits a management request to the RRU/AAU. The RRU/AAU feeds back a management request response to the active WDM equipment according to the management request. The management request response carries first status information and/or second status information. The first status information is used to indicate the status of the RRU/AAU, and the second status information is used to indicate the status of the color optical module in the RRU/AAU. That is, the active WDM equipment manages the color optical module in the RRU/AAU equipment, including various functions of querying, configuration, monitoring, etc. Meanwhile, the active WDM equipment may manage the status of the RRU/AAU equipment through the color optical module, including querying, monitoring and other functions, but excluding the configuration function.

Furthermore, the management of the color optical module in the RRU/AAU equipment by the active WDM equipment includes, but is not limited to, the functions of optical module driving voltage, driving current, transmitting optical power, receiving optical power, etc.

The active WDM equipment comprehensively considers the requirements of the Open-WDM system and a wireless system according to factors such as the transmission distance between the active WDM equipment and the RRU/AAU equipment, the link loss, the transmitting and receiving optical power of the color optical module in the RRU/AAU, etc., and the active WDM equipment may issue an instruction to change the transmitting optical power of the color optical module in the RRU/AAU, so as to adapt to the power budget requirements of a transmission link.

The system further includes: a BBU and/or a DU connected with the active WDM equipment. The BBU/DU transmits the management request for the RRU/AAU to the active WDM equipment, and the active WDM equipment forwards the management request to the RRU/AAU. The active WDM equipment is connected with the BBU/DU using gray optical signal or color optical signal. The BBU/DU and other wireless baseband processing units may also manage the RRU/AAU, including management of some parameters of the color optical module in the RRU/AAU. The parameters may be signaled to the Open-WDM system for management and control of the Open-WDM system. Optionally, the DU is co-located with a CU.

In the radio access network control system of some embodiments of the disclosure, the active WDM equipment is added, so that the active WDM equipment transmits the management request to the RRU/AAU so as to obtain the status of the RRU and/or the status of the color optical module in the RRU/AAU, thereby implementing the management of the color optical module in the RRU/AAU and links. Through the joint management of the RRU/AAU by wireless and transport systems, the management problems of an optical fiber network in the fronthaul network and the color optical module in the RRU/AAU in the mobile communication system are solved at a low cost, and the operation and maintenance capability of the network is improved.

It can be understood that these embodiments described in some embodiments of the disclosure may be implemented by hardware, software, firmware, middleware, a microcode, or a combination thereof. In case of implementation with the hardware, the unit, module, subunit, submodule, and the like may be implemented in one or more Application Specific Integrated Circuits (ASICs), Digital Signal Processors (DSPs), DSP Devices (DSPDs), Programmable Logic Devices (PLDs), Field-Programmable Gate Arrays (FPGAs), universal processors, controllers, microcontrollers, microprocessors, other electronic units configured to execute the functions in the application, or combinations thereof.

In case of implementation with the software, the technology as described in the embodiments of the disclosure may be implemented through the modules (for example, processes and functions) executing the functions in the embodiments of the disclosure. A software code may be stored in the memory and executed by the processor. The memory may be implemented in the processor or outside the processor.

## Claims

1. A method for controlling a radio access network, performed by an active Wavelength Division Multiplexing, WDM, equipment, comprising
transmitting (41) a management request to a Radio Remote Unit, RRU, or Active Antenna Unit, AAU, via a passive wavelength division multiplexing and demultiplexing equipment, wherein the passive wavelength division multiplexing and demultiplexing equipment is connected with the active WDM equipment through an optical fiber;
**characterized by** further comprising
receiving (42) a management request response corresponding to the management request from the RRU or AAU via the passive wavelength division multiplexing and demultiplexing equipment, the management request response carrying second status information, the second status information being used to indicate a status of a color optical module in the RRU or AAU, the RRU or AAU being provided with the color optical module, the color optical module being connected with one port of the passive wavelength division multiplexing and demultiplexing equipment, and the passive wavelength division multiplexing and demultiplexing equipment being configured to multiplex and transmit multiple wavelengths from different RRUs or AAUs;
wherein the status of the color optical module comprises at least one of: driving voltage, driving current, transmitting optical power, or receiving optical power.

2. The method for controlling the radio access network of claim 1, wherein the management request comprises at least one of:
a first request for querying the status of the RRU or AAU;
a second request for monitoring the status of the RRU or AAU;
a third request for querying the status of the color optical module;
a fourth request for monitoring the status of the color optical module; and
a fifth request for configuring the status of the color optical module.

3. The method for controlling the radio access network of claim 2, wherein when the management request comprises the fifth request, transmitting (41) the management request to the RRU or AAU comprises:
transmitting the fifth request to the RRU or AAU according to a preset parameter, the preset parameter comprising at least one of: transmission distance between the active WDM equipment and the RRU or AAU, link loss, transmitting and receiving optical power of the color optical module, and transmitting and receiving optical power of the active WDM equipment.

4. The method for controlling the radio access network of claim 1, further comprising:
receiving multiple wavelengths multiplexed and transmitted from a passive wavelength division multiplexing/demultiplexing equipment connected with the RRU or AAU.

5. The method for controlling the radio access network of claim 1, before transmitting (41) the management request to the RRU or AAU, further comprising:
receiving the management request for the RRU or AAU from the side of at least one of a Building Base band unit, BBU or a Distribution Unit, DU;
wherein transmitting the management request to the RRU or AAU comprises:
forwarding the received management request to the RRU or AAU.

6. The method for controlling the radio access network of claim 1 or 5, wherein after receiving the management request response corresponding to the management request from the RRU or AAU, the method further comprises:
transmitting the management request response to at least one of the BBU or the DU.

7. A network equipment (500), wherein the network equipment is an active Wavelength Division Multiplexing, WDM, equipment, comprising:
a first transmitting module (510), configured to transmit a management request to a Radio Remote Unit, RRU, or Active Antenna Unit, AAU, via a passive wavelength division multiplexing and demultiplexing equipment, wherein the passive wavelength division multiplexing and demultiplexing equipment is connected with the active WDM equipment through an optical fiber; and **characterized by** further comprising
a first receiving module (520), configured to receive a management request response corresponding to the management request from the RRU or AAU via the passive wavelength division multiplexing and demultiplexing equipment, the management request response carrying second status information, and the second status information being used to indicate a status of a color optical module on the RRU or AAU, the RRU or AAU being provided with the color optical module, the color optical module being connected with one port of the passive wavelength division multiplexing and demultiplexing equipment, and the passive wavelength division multiplexing and demultiplexing equipment being configured to multiplex and transmit multiple wavelengths from different RRUs or AAUs;
wherein the status of the color optical module comprises at least one of: driving voltage, driving current, transmitting optical power, or receiving optical power.

8. The network equipment of claim 7, wherein the management request comprises at least one of:
a first request for querying the status of the RRU or AAU;
a second request for monitoring the status of the RRU or AAU;
a third request for querying the status of the color optical module;
a fourth request for monitoring the status of the color optical module; and
a fifth request for configuring the status of the color optical module.

9. The network equipment of claim 8, wherein when the management request comprises the fifth request, the first transmitting module (510) comprises:
a first transmitting submodule, configured to transmit the fifth request to the RRU or AAU according to a preset parameter, the preset parameter comprising at least one of: transmission distance between the active WDM equipment and the RRU or AAU, link loss, transmitting and receiving optical power of the color optical module, or transmitting and receiving optical power of the active WDM equipment.

10. A radio access network system, comprising:
the network equipment of any one of claims 7-9;
a passive wavelength division multiplexing and demultiplexing equipment, connected with the active WDM equipment through an optical fiber; and
at least two Radio Remote Units, RRUs, or Active Antenna Units, AAUs, each RRU or AAU being provided with a color optical module, and each color optical module being connected with one port of the passive wavelength division multiplexing and demultiplexing equipment;
wherein the active WDM equipment is configured to transmit a management request to the RRU or AAU, the RRUs or AAUs are configured to feed back a management request response to the active WDM equipment according to the management request, the management request response carrying second status information, and the second status information being used to indicate a status of the color optical module in the RRU or AAU;
wherein the status of the color optical module comprises at least one of: driving voltage, driving current, transmitting optical power, or receiving optical power.

11. The radio access network system of claim 10, further comprising: at least one of a Building Base band Unit, BBU, or a Distribution Unit, DU, connected with the active WDM equipment, wherein the BBU or DU is configured to transmit the management request for the RRU or AAU to the active WDM equipment, and the active WDM equipment is configured to forward the management request to the RRU or AAU.

12. The radio access network system of claim 10, wherein the color optical module is a color optical module with a fixed wavelength, or, the color optical module is a color optical module with a tunable wavelength.

13. The radio access network system of claim 10, wherein the passive multiplexing and demultiplexing equipment is replaceable by a passive optical splitter.

14. The radio access network system of claim 10, wherein the DU is co-located with a Centralized Unit, CU.

## Patentansprüche

1. Verfahren zur Steuerung eines Funkzugangsnetzwerks, das von einer aktiven Wellenlängenmultiplex-Einrichtung (Wavelength Division Multiplexing, WDM) durchgeführt wird und Folgendes umfasst:
Übertragen (41) einer Verwaltungsanforderung an eine Funkferneinheit (Radio Remote Unit, RRU) oder eine aktive Antenneneinheit (Active Antenna Unit, AAU) über eine passive Wellenlängenmultiplex- und Demultiplex-Einrichtung, wobei die passive Wellenlängenmultiplex- und Demultiplex-Einrichtung mit der aktiven WDM-Einrichtung über eine optische Faser verbunden ist; **dadurch gekennzeichnet, dass** es ferner umfasst
Empfangen (42) einer Antwort auf eine Verwaltungsanforderung entsprechend der Verwaltungsanforderung von der RRU oder AAU über die passive Wellenlängenmultiplex- und Demultiplex-Einrichtung, wobei die Antwort auf die Verwaltungsanforderung zweite Statusinformationen enthält, wobei die zweiten Statusinformationen verwendet werden, um einen Status eines farboptischen Moduls in der RRU oder AAU anzuzeigen, wobei die RRU oder AAU mit dem farboptischen Modul ausgestattet sind, wobei das farboptische Modul mit einem Port der passiven Wellenlängenmultiplex- und Demultiplex-Einrichtung verbunden ist, und wobei die passive Wellenlängenmultiplex- und Demultiplex-Einrichtung dafür konfiguriert ist, mehrere Wellenlängen von verschiedenen RRUs oder AAUs zu multiplexen und zu übertragen,
wobei der Status des farboptischen Moduls mindestens eines der Folgenden umfasst: Treiberspannung, Treiberstrom, optische Sendeleistung oder optische Empfangsleistung.

2. Verfahren zur Steuerung des Funkzugangsnetzwerks nach Anspruch 1, wobei die Verwaltungsanforderung mindestens eines der Folgenden umfasst:
eine erste Anforderung zur Abfrage des Status der RRU oder AAU;
eine zweite Anforderung zur Überwachung des Status der RRU oder AAU;
eine dritte Anforderung zur Abfrage des Status des farboptischen Moduls;
eine vierte Anforderung zur Überwachung des Status des farboptischen Moduls; und
eine fünfte Anforderung zum Konfigurieren des Status des farboptischen Moduls.

3. Verfahren zur Steuerung des Funkzugangsnetzwerks nach Anspruch 2, wobei, wenn die Verwaltungsanforderung die fünfte Anforderung umfasst, das Übertragen (41) der Verwaltungsanforderung an die RRU oder AAU Folgendes umfasst:
Übertragen der fünften Anforderung an die RRU oder AAU gemäß einem voreingestellten Parameter, wobei der voreingestellte Parameter mindestens eines der Folgenden umfasst: Übertragungsentfernung zwischen der aktiven WDM-Einrichtung und der RRU oder AAU, Verbindungsverlust, optische Sende- und Empfangsleistung des farboptischen Moduls und optische Sende- und Empfangsleistung der aktiven WDM-Einrichtung.

4. Verfahren zur Steuerung des Funkzugangsnetzwerks nach Anspruch 1, das ferner umfasst:
Empfangen mehrerer Wellenlängen, die von einer passiven Wellenlängenmultiplex-/Demultiplex-Einrichtung, die mit der RRU oder AAU verbunden ist, gemultiplext und übertragen werden.

5. Verfahren zur Steuerung des Funkzugangsnetzwerks nach Anspruch 1, das vor dem Übertragen (41) der Verwaltungsanforderung an die RRU oder AAU ferner umfasst:
Empfangen der Verwaltungsanforderung für die RRU oder AAU von mindestens einer Basisbandeinheit (Base Band Unit, BBU) oder einer Verteilereinheit (Distribution Unit, DU) aus dem Gebäude;
wobei das Übertragen der Verwaltungsanforderung an die RRU oder AAU Folgendes umfasst:
Weiterleiten der empfangenen Verwaltungsanforderung an die RRU oder AAU.

6. Verfahren zur Steuerung des Funkzugangsnetzwerks nach Anspruch 1 oder 5, wobei das Verfahren nach dem Empfang der Antwort auf die Verwaltungsanforderung, die der Verwaltungsanforderung von der RRU oder AAU entspricht, ferner Folgendes umfasst:
Übertragen der Antwort auf die Verwaltungsanforderung an mindestens eine der BBU oder DU.

7. Netzwerkeinrichtung (500), wobei die Netzwerkeinrichtung eine aktive Wellenlängenmultiplex-Einrichtung (WDM) ist, die umfasst:
ein erstes Sendemodul (510), das so konfiguriert ist, dass es eine Verwaltungsanforderung über eine passive Wellenlängenmultiplex- und Demultiplex-Einrichtung an eine Funkfemeinheit (RRU) oder eine aktive Antenneneinheit (AAU) sendet, wobei die passive Wellenlängenmultiplex- und Demultiplex-Einrichtung mit der aktiven WDM-Einrichtung über eine optische Faser verbunden ist; und **dadurch gekennzeichnet, dass** sie ferner umfasst:
ein erstes Empfangsmodul (520), das so konfiguriert ist, dass es eine Antwort auf eine Verwaltungsanforderung entsprechend der Verwaltungsanforderung von der RRU oder AAU über die passive Wellenlängenmultiplex- und -demultiplex-Einrichtung empfängt, wobei die Antwort auf die Verwaltungsanforderung zweite Statusinformationen enthält, und wobei die zweiten Statusinformationen verwendet werden, um einen Status eines farboptischen Moduls in der RRU oder AAU anzuzeigen, wobei die RRU oder AAU mit dem farboptischen Modul ausgestattet sind, wobei das farboptische Modul mit einem Port der passiven Wellenlängenmultiplex- und Demultiplex-Einrichtung verbunden ist, und wobei die passive Wellenlängenmultiplex- und Demultiplex-Einrichtung dafür konfiguriert ist, mehrere Wellenlängen von verschiedenen RRUs oder AAUs zu multiplexen und zu übertragen;
wobei der Status des farboptischen Moduls mindestens eines der Folgenden umfasst: Treiberspannung, Treiberstrom, optische Sendeleistung oder optische Empfangsleistung.

8. Netzwerkeinrichtung nach Anspruch 7, wobei die Verwaltungsanforderung mindestens eines der Folgenden umfasst:
eine erste Anforderung zur Abfrage des Status der RRU oder AAU;
eine zweite Anforderung zur Überwachung des Status der RRU oder AAU;
eine dritte Anforderung zur Abfrage des Status des farboptischen Moduls;
eine vierte Anforderung zur Überwachung des Status des farboptischen Moduls; und
eine fünfte Anforderung zum Konfigurieren des Status des farboptischen Moduls.

9. Netzwerkeinrichtung nach Anspruch 8, wobei, wenn die Verwaltungsanforderung die fünfte Anforderung umfasst, das erste Sendemodul (510) Folgendes umfasst:
ein erstes Übertragungssubmodul, das dafür konfiguriert ist, die fünfte Anforderung gemäß einem voreingestellten Parameter an die RRU oder AAU zu übertragen, wobei der voreingestellte Parameter mindestens eines der Folgenden umfasst: Übertragungsentfernung zwischen der aktiven WDM-Einrichtung und der RRU oder AAU, Verbindungsverlust, optische Sende- und Empfangsleistung des farboptischen Moduls oder optische Sende- und Empfangsleistung der aktiven WDM-Einrichtung.

10. Funkzugangsnetzwerksystem, das umfasst:
die Netzwerkeinrichtung nach einem der Ansprüche 7-9;
eine passive Wellenlängenmultiplex- und Demultiplex-Einrichtung, die mit der aktiven WDM-Einrichtung über eine optische Faser verbunden ist; und
mindestens zwei Radio Remote Units, RRUs, oder Active Antenna Units, AAUs, wobei jede RRU oder AAU mit einem farboptischen Modul versehen ist, und wobei das farboptische Modul mit einem Port der passiven Wellenlängenmultiplex- und Demultiplex-Einrichtung verbunden ist, und
wobei die aktive WDM-Einrichtung dafür konfiguriert ist, eine Verwaltungsanforderung an die RRU oder AAU zu übertragen, wobei die RRUs oder AAUs dafür konfiguriert sind, eine Antwort auf die Verwaltungsanforderung an die aktive WDM-Einrichtung entsprechend der Verwaltungsanforderung zurückzusenden, wobei die Antwort auf die Verwaltungsanforderung zweite Statusinformationen enthält, und wobei die zweiten Statusinformationen verwendet werden, um einen Status eines farboptischen Moduls in der RRU oder AAU anzuzeigen,
wobei der Status des farboptischen Moduls mindestens eines der Folgenden umfasst: Treiberspannung, Treiberstrom, optische Sendeleistung oder optische Empfangsleistung.

11. Funkzugangsnetzwerksystem nach Anspruch 10, das ferner umfasst:
mindestens eine Basisbandeinheit, BBU, oder eine Verteilungseinheit, DU, die mit der aktiven WDM-Einrichtung verbunden ist, wobei die BBU oder DU dafür konfiguriert ist, die Verwaltungsanforderung für die RRU oder AAU an die aktive WDM-Einrichtung zu übertragen, und die aktive WDM-Einrichtung dafür konfiguriert ist, die Verwaltungsanforderung an die RRU oder AAU weiterzuleiten.

12. Funkzugangsnetzwerksystem nach Anspruch 10, wobei das farboptische Modul ein farboptisches Modul mit einer festen Wellenlänge ist, oder das farboptische Modul ein farboptisches Modul mit einer abstimmbaren Wellenlänge ist.

13. Funkzugangsnetzwerksystem nach Anspruch 10, wobei die passive Multiplex- und Demultiplex-Einrichtung durch einen passiven optischen Splitter ersetzbar ist.

14. Funkzugangsnetzwerksystem nach Anspruch 10, wobei die DU zusammen mit einer Zentraleinheit (Centralized Unit, CU) untergebracht ist.

## Revendications

1. Procédé de commande d'un réseau d'accès radio, réalisé par un équipement de multiplexage par répartition en longueur d'onde, WDM, actif, comprenant
la transmission (41) d'une demande de gestion à une unité radio distante, RRU, ou à une unité d'antenne active, AAU, par l'intermédiaire d'un équipement de multiplexage et de démultiplexage par répartition en longueur d'onde passif, dans lequel l'équipement de multiplexage et de démultiplexage par répartition en longueur d'onde passif est connecté à l'équipement WDM actif par une fibre optique ;
**caractérisé en ce qu'**il comprend en outre
la réception (42) d'une réponse de demande de gestion correspondant à la demande de gestion à partir de la RRU ou de l'AAU par l'intermédiaire de l'équipement de multiplexage et de démultiplexage par répartition en longueur d'onde passif, la réponse de demande de gestion portant une deuxième information d'état, la deuxième information d'état étant utilisée pour indiquer un état d'un module optique couleur dans la RRU ou l'AAU, la RRU ou l'AAU étant pourvue du module optique couleur, le module optique couleur est connecté à un port de l'équipement de multiplexage et de démultiplexage par répartition en longueur d'onde passif, et l'équipement de multiplexage et de démultiplexage par répartition en longueur d'onde passif étant configuré pour multiplexer et transmettre de multiples longueurs d'onde à partir de différentes RRU ou AAU ;
dans lequel l'état du module optique couleur comprend au moins l'un parmi : tension d'attaque, courant d'attaque, puissance optique de transmission, ou puissance optique de réception.

2. Procédé de commande du réseau d'accès radio selon la revendication 1, dans lequel la demande de gestion comprend au moins l'une parmi :
une première demande d'interrogation de l'état de la RRU ou de l'AAU ;
une deuxième demande de surveillance de l'état de la RRU ou de l'AAU ;
une troisième demande d'interrogation de l'état du module optique couleur ; et
une quatrième demande de surveillance de l'état du module optique couleur ; et
une cinquième demande de configuration de l'état du module optique couleur.

3. Procédé de commande du réseau d'accès radio selon la revendication 2, dans lequel, lorsque la demande de gestion comprend la cinquième demande, la transmission (41) de la demande de gestion à la RRU ou à l'AAU comprend :
la transmission de la cinquième demande à la RRU ou à l'AAU selon un paramètre prédéfini, le paramètre prédéfini comprenant au moins l'une parmi : distance de transmission entre l'équipement WDM actif et la RRU ou l'AAU, perte de liaison, puissance optique de transmission et de réception du module optique couleur, et puissance optique de transmission et de réception de l'équipement WDM actif.

4. Procédé de commande du réseau d'accès radio selon la revendication 1, comprenant en outre :
la réception de multiples longueurs d'onde multiplexées et transmises à partir d'un équipement de multiplexage/démultiplexage par répartition en longueur d'onde passif connecté à la RRU ou à l'AAU.

5. Procédé de commande du réseau d'accès radio selon la revendication 1, avant la transmission (41) de la demande de gestion à la RRU ou à l'AAU, comprenant en outre :
la réception de la demande de gestion pour la RRU ou l'AAU à partir du côté d'au moins l'une parmi une unité de bande de base de bâtiment, BBU, ou une unité de distribution, DU ;
dans lequel la transmission de la demande de gestion à la RRU ou à l'AUA comprend :
le transfert de la demande de gestion reçue à la RRU ou à l'AAU.

6. Procédé de commande du réseau d'accès radio selon la revendication 1 ou 5, dans lequel après la réception de la réponse de demande de gestion correspondant à la demande de gestion à partir de la RRU ou de l'AAU, le procédé comprend en outre :
la transmission de la réponse de demande de gestion à au moins l'une parmi la BBU ou la DU.

7. Équipement de réseau (500), dans lequel l'équipement de réseau est un équipement de multiplexage par répartition en longueur d'onde, WDM, actif, comprenant :
un premier module de transmission (510), configuré pour transmettre une demande de gestion à une unité radio distante, RRU, ou à une unité d'antenne active, AAU, par l'intermédiaire d'un équipement de multiplexage et de démultiplexage par répartition en longueur d'onde passif, dans lequel l'équipement de multiplexage et de démultiplexage par répartition en longueur d'onde passif est connecté à l'équipement WDM actif par une fibre optique ; et **caractérisé en ce qu'**il comprend en outre
un premier module de réception (520), configuré pour recevoir une réponse de demande de gestion correspondant à la demande de gestion à partir de la RRU ou de l'AAU par l'intermédiaire de l'équipement de multiplexage et de démultiplexage par répartition en longueur d'onde passif, la réponse de demande de gestion portant une deuxième information d'état, et la deuxième information d'état étant utilisée pour indiquer un état d'un module optique couleur sur la RRU ou AAU, la RRU ou l'AAU étant pourvue du module optique couleur, le module optique couleur étant connecté à un port de l'équipement de multiplexage et de démultiplexage par répartition en longueur d'onde passif, et l'équipement de multiplexage et de démultiplexage par répartition en longueur d'onde passif étant configuré pour multiplexer et transmettre de multiples longueurs d'onde à partir de différentes RRU ou AAU ;
dans lequel l'état du module optique couleur comprend au moins l'un parmi : tension d'attaque, courant d'attaque, puissance optique de transmission, ou puissance optique de réception.

8. Équipement de réseau selon la revendication 7, dans lequel la demande de gestion comprend au moins l'une parmi :
une première demande d'interrogation de l'état de la RRU ou de l'AAU ;
une deuxième demande de surveillance de l'état de la RRU ou de l'AAU ;
une troisième demande d'interrogation de l'état du module optique couleur ;
une quatrième demande de surveillance de l'état du module optique couleur ; et
une cinquième demande de configuration de l'état du module optique couleur.

9. Équipement de réseau selon la revendication 8, dans lequel, lorsque la demande de gestion comprend la cinquième demande, le premier module de transmission (510) comprend :
un premier sous-module de transmission, configuré pour transmettre la cinquième demande à la RRU ou à l'AAU selon un paramètre prédéfini, le paramètre prédéfini comprenant au moins l'une parmi : distance de transmission entre l'équipement WDM actif et la RRU ou l'AAU, perte de liaison, puissance optique de transmission et de réception du module optique couleur, ou puissance optique de transmission et de réception de l'équipement WDM actif.

10. Système de réseau d'accès radio, comprenant :
l'équipement de réseau selon l'une quelconque des revendications 7 à 9 ;
un équipement de multiplexage et de démultiplexage par répartition en longueur d'onde passif, connecté à l'équipement WDM actif par une fibre optique ; et
au moins deux unités radio distantes, RRU, ou unités d'antenne actives, AAU, chaque RRU ou AAU étant pourvue d'un module optique couleur, et chaque module optique couleur étant connecté à un port de l'équipement de multiplexage et de démultiplexage par répartition en longueur d'onde passif ;
dans lequel l'équipement WDM actif est configuré pour transmettre une demande de gestion à la RRU ou à l'AAU, les RRU ou les AAU sont configurées pour renvoyer une réponse de demande de gestion à l'équipement WDM actif selon la demande de gestion, la réponse de demande de gestion portant une deuxième information d'état, et la deuxième information d'état étant utilisée pour indiquer un état du module optique couleur dans la RRU ou l'AAU ;
dans lequel l'état du module optique couleur comprend au moins l'un parmi : tension d'attaque, courant d'attaque, puissance optique de transmission, ou puissance optique de réception.

11. Système de réseau d'accès radio selon la revendication 10, comprenant en outre : au moins l'une parmi une unité de bande de base de bâtiment, BBU, ou une unité de distribution, DU, connectée à l'équipement WDM actif, dans lequel la BBU ou DU est configurée pour transmettre la demande de gestion pour la RRU ou l'AAU à l'équipement WDM actif, et l'équipement WDM actif est configuré pour transférer la demande de gestion à la RRU ou à l'AAU.

12. Système de réseau d'accès radio selon la revendication 10, dans lequel le module optique couleur est un module optique couleur avec une longueur d'onde fixe, ou, le module optique couleur est un module optique couleur avec une longueur d'onde accordable.

13. Système de réseau d'accès radio selon la revendication 10, dans lequel l'équipement de multiplexage et de démultiplexage passif peut être remplacé par un répartiteur optique passif.

14. Système de réseau d'accès radio selon la revendication 10, dans lequel la DU est colocalisée avec une unité centralisée, CU.
